# EUROPEAN PATENT APPLICATION

(11) **EP 1 104 855 A1**
(43) Date of publication of application: **06.06.2001**
(21) Application number: 99929001.8
(22) Date of filing: 08.07.1999
(51) Int. Cl.: F16C 19/20

(54) **PURE ROLLING BEARING**

(30) Priority: 21.08.1998 CN 98224923
(71) Applicant: Shanghai Dabang Science Industry & Trade Co. Ltd., Shanghai 201908 (CN)
(72) Inventor: YU, Dabang, Guang Zhong Lu Shanghai (CN); YU, Daxi, Guang Zhong Lu Shanghai (CN)
(74) Representative: Copp, David Christopher
(86) International application number: CN9900088
(87) International publication number: WO0011361

(57) **Abstract**

The present invention relates to a pure rolling bearing without cage members and sliding friction, comprising an inner ring, an outer ring, rolling members provided between the inner and outer rings, positioning rolling members and positioning rings. Every positioning rolling member is provided between two adjacent rolling members and contacts therewith. The positioning rings are positioned on the slideway at the two ends of the said positioning rolling members and keep rolling contact therewith.

## Description

### Technical Field

This invention relates to a rolling bearing, particularly to such a purely rolling bearing without sliding friction.

### Background of the Invention

The usual rolling bearing comprises an inner race ring and an outer race ring, a number of rolling members and a retainer. The retainer is provided in the bearing for the rolling members to locate each other and for the relative location of the rolling bodies in the bearing. The rolling members are restricted at high speed by the said retainer because of sliding friction, no matter what structure or what material and smooth finish. The sliding friction resistance influences seriously the properties and life of a bearing.

The relative sliding friction between the rolling members and retainer will cause a series of problems while the bearing is running, especially at high speed, such as it is difficult to be lubricated, the temperature rising increases, the noise is heightened. Under the conditions of high temperature and high speed, the stress will increase suddenly which results in ruin of the bearing. The rolling friction resistance in a bearing is not worth mentioning compared with the sliding friction resistance. The existing of the sliding friction causes that the load capacity of the rolling bearing is obviously reduced and the energy loss is remarkable. At high speed, the sliding friction force produced by the action of the centrifugal force between the rolling members and the retainer will increase notably. The friction stress concentration will bring about the ruin of the bearing rapidly. Consequently, the raise of the limited speed of the rolling bearing is confined with the sliding friction.

### Summary of the Invention

The object of the invention is to provide a new purely rolling bearing without normal cage member, using rolling constraint instead of the sliding constraint to improved the property of the bearing and prolong the life of the bearing.

In order to realize the above object, the invention provides a purely rolling bearing which comprises an inner race ring, an outer race ring, a number of rolling members between the inner race ring and the outer race ring. The said purely rolling bearing also comprises positioning rolling members, which are arranged in alternation with the rolling members and kept in rolling contact with the balls, and a positioning ring arranged on the race ways of the two ends of the positioning rolling members and keep rolling contact.

The invention is put forward as follows:

Each positioning rolling member is assembled between the two adjacent rolling members. The positioning rolling members insure simultaneously uniform circumferential spacing of the adjacent rolling members and confine the rolling members to axial location in the bearing. The axial and radial location of the positioning rolling members are restricted by the positioning rings on the raceways of the two opposite ends of the positioning rolling members. The contacts between the positioning rings and any raceway of the positioning rolling members are point contacts, and so are the point contacts between any one of the positioning rolling member and the adjacent rolling member. The movements of the positioning rolling members include a self-rotation and a revolution round the axis of the bearing. The relative velocity difference between a contact point on any one of the location rolling bodies and the contact point on the rolling body contacted, both of which coincide each other, is zero, and so is the relative velocity difference between a contact point on either of the location rings and the contact point on the location rolling body contacted, both of which coincide each other. Therefore, those movements of the contact points all belong to purely rolling movements. There is not any relatively sliding friction. The bearing is a purely rolling bearing, which name matches reality. The assembly and production of the bearing of the invention are easy. So the invention could be extended and applied easily and widely.

The following will further describe in detail the invention in combination with a preferred embodiment together with the figures attached.

### Brief Description of the Drawings

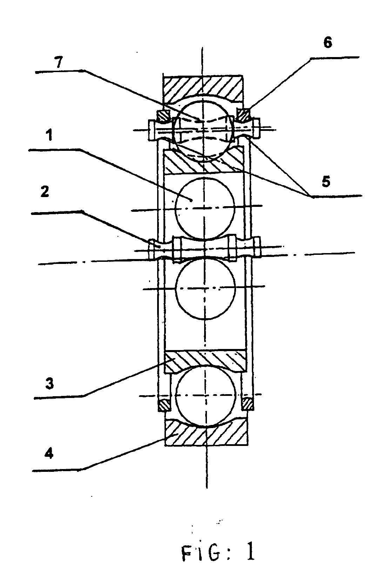

Fig. 1 is the radial section view of a rolling bearing of the invention.

### Detailed Description of the Preferred Embodiments

Please refer to Fig.1, each positioning rolling member 2 is assembled between two adjacent rolling members 1 and along the circumferential direction. The positioning rolling members 2 insure simultaneously uniform circumferential spacing between two adjacent rolling members 1 and confine the rolling members to the axial location in the bearing. The axial location and radial location of the positioning rolling members are performed by positioning rings 6 on the raceways 5, which is a circular arc in cross section, of two opposite ends of the positioning rolling members. The contacts between either of the location rings 6 and any one of the raceways 5, any one of the location rolling bodies 2 and the rolling body 1 contacted and any one of the rolling bodies 1 and the inner race ring 3 or the outer race ring 4 of the bearing are all point contacts, and the relative velocity differences between any two points contacted with each other are all zero. Therefore the bearing is a purely rolling bearing.

The cross section of the raceway 5 is concave shape, the cross section of the positioning ring 6 is a convex shape, so that they form a rolling contact. On the contrary, let the cross section of the raceway 5 be a convex shape and the cross section of the positioning ring 6 be a concave shape, it is feasible too. In addition, the cross section of the raceway 5 and the central raceway 7 of any of the positioning rolling member 2 contacted with the rolling member 1 may be V-shaped, circular-arc-shaped or notch-shaped, and so on. The cross sections of the raceway of the inner race ring 3 and the outer race ring 4 may also be V-shaped, circular-arc-shaped or notch-shaped, and so on.

The positioning rolling member 2 may be made into parted parts, for the convenience of the assembly and production. That is, the two parts which form the two opposite end raceways 5 and the part which forms the central raceway 7 may be produced separately first, then be fixed through the tight fit or screw fit and so on. Of cause, the positioning rolling member 2 may be made into a single part.

A variety of equivalent variations may be made by the technicians familiar with the technical realm on the basic of the invention, although the invention has been described above combined with a preferred embodiment. Therefore, the scope of the invention should be defined by the claims.

## Claims

1. A purely rolling bearing comprises an inner race ring (3), an outer race ring (4), a number of rolling members (1) between the inner race ring (3) and the outer race ring (4), what characterized is that it is also comprises:
positioning rolling members (2) provided in alternation with the rolling members (1) and kept in rolling contact, and
two positioning rings (6) provided on the race ways (5) of the two ends of the positioning rolling members (2) and kept in rolling contact.

2. The bearing of claim 1, wherein the said positioning rolling members (2) are all single parts.

3. The bearing of claim 1, wherein the said positioning rolling members (2) are parted parts.

4. The bearing of claim 1, wherein the cross sections of the two opposite ends of any one of the said positioning rolling members (2) may be in concave shape or convex shape.

5. The bearing of claim 1, wherein the cross sections of the said positioning rings (6) may be made into concave shape or convex shape, so that they matches the raceways (5) of the positioning rolling members (2) and roll on them.

6. The bearing of claim 4, wherein the cross sections of the raceways (5) of the two opposite ends of any one of the said positioning rolling members (2) and of the central raceway (7) of any one of the said positioning rolling members (2) rolling on the rolling members (1) may be V-shaped, circular-shaped or notch-shaped.

7. The bearing of claim 1, wherein the cross sections of the race ways of the said inner race ring (3) and outer race ring (4) may be V-shaped, circular-arc-shaped or notch-shaped.
